(19) Europäisches Patentamt
European Patent Office
Office européen des brevets

(11) **EP 3 111 774 A2**

(12) **DEMANDE DE BREVET EUROPEEN**

(43) Date de publication:
**04.01.2017 Bulletin 2017/01**

(51) Int Cl.:
*A23K 10/30* (2016.01)     *A23K 20/20* (2016.01)
*A23K 50/10* (2016.01)     *A23K 50/60* (2016.01)

(21) Numéro de dépôt: **16177017.7**

(22) Date de dépôt: **29.06.2016**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **30.06.2015  BE 201505415**
              **30.06.2015  BE 201505414**

(71) Demandeurs:
  • **Dumoulin**
    **5300 Seille (BE)**

  • **Dumoulin**
    **8500 Kortrijk (BE)**
  • **AVEVE**
    **3000 Leuven (BE)**

(72) Inventeur: **LAGAE, Peter Johan Jozef**
    **8790 Waregem (BE)**

(74) Mandataire: **Gevers Patents**
    **Intellectual Property House**
    **Holidaystraat 5**
    **1831 Diegem (BE)**

(54) **PRODUIT DE GRAIN CULTIVÉ PAUVRE EN FER**

(57)     Un procédé d'obtention, au départ de grains entiers, d'une fraction de grains (F) présentant une teneur en fer réduite d'au moins 25% en poids par rapport à une teneur en fer initiale desdits grains entiers, ledit procédé comprenant les étapes suivantes :
Etape 1 : une étape de traitement desdits grains entiers,
Etape 2 : une étape de séparation desdits grains traités à l'étape 1 de telle sorte à obtenir une première fraction de grains ($F_1$) et une deuxième fraction de grains ($F_2$), et
Etape 3 : une étape de séparation de ladite première fraction de grains ($F_1$) obtenue à l'étape 2, sur base de la taille et/ou de la forme desdits premiers fragments, de telle sorte à isoler ladite fraction de grains (F) présentant ladite teneur en fer réduite.

EP 3 111 774 A2

## Description

### Domaine technique

La présente invention porte sur un procédé d'obtention d'une fraction de grains issue de grains de céréales, d'oléagineux et/ou de légumineuses présentant une teneur en fer réduite tout en conservant de bonnes propriétés nutritionnelles et une bonne valeur énergétique. La présente invention porte également sur les fractions et les produits transformés obtenus à partir de ladite fraction obtenue selon le procédé suivant l'invention.

### Etat antérieur de la technique

La teneur en fer (Fe) est d'une grande importance dans certains types d'alimentation animale, le fer pouvant provenir de diverses sources. D'une part, le fer peut être naturellement présent dans la matière première servant à fabriquer l'alimentation animale. D'autre part, le fer peut également être ajouté à la nourriture, ceci afin d'atteindre une teneur en fer souhaitée dans le cas où la teneur initiale est insuffisante. Enfin, du fer peut également provenir des frottements de la matière première contre des éléments métalliques dans les installations de transformation de la chaîne de production.

Il est bien connu que le fer a une influence sur plusieurs fonctions métaboliques, entre autres sur la quantité d'hémoglobine dans les globules rouges et sur la quantité de globules rouges présents dans le sang. C'est pourquoi il est reconnu que la teneur en fer (Fe) est d'une grande importance dans certains types d'alimentation animale.

En outre, le fer est connu pour avoir une influence significative sur la couleur de la chair animale, et donc, après abattage de l'animal, sur la couleur de la viande. A ce sujet, dans certaines filières d'élevage d'animaux, tel que l'élevage de veaux de boucherie, il est souhaitable d'obtenir une viande présentant une couleur allant du blanc au rosé, une alimentation animale trop riche en fer portant préjudice à l'obtention d'une telle couleur de viande. Ainsi, certaines matières premières ne peuvent pas entrer dans la composition de l'alimentation de certains animaux en raison de leur teneur en fer trop élevée qui a un impact direct sur l'aspect de la viande, essentiellement sur la couleur de cette dernière.

De nos jours, l'alimentation animale et plus particulièrement l'alimentation des veaux de boucherie consiste en une combinaison d'une alimentation de type liquide (basée sur les produits laitiers, par exemple le lait maternel) et d'une alimentation de type solide (par exemple une ration essentiellement sèche à base de céréales). L'utilisation d'une telle combinaison doit permettre d'assurer un juste équilibre entre les différents nutriments essentiels à une croissance et à un développement adéquat et normal des jeunes veaux.

Une solution pour limiter la teneur en fer pourrait être d'augmenter la part d'aliments de type liquide dans l'alimentation des veaux par rapport à l'alimentation de type solide, car l'alimentation de type liquide présente typiquement une teneur en fer particulièrement faible.

Malheureusement, cette solution présente un inconvénient majeur dès lors qu'une alimentation uniquement ou essentiellement liquide aurait un impact négatif sur le bien-être des animaux et notamment des veaux.

Il serait donc préférable, au contraire, d'augmenter la proportion d'aliments solides, riches en amidon, dans l'alimentation animale par rapport à la proportion d'aliments de type liquide. Cependant, dans ce cas, la teneur en fer des aliments solides demeure souvent trop élevée, ce qui limite la part d'aliments solides pouvant être présente dans la ration alimentaire des veaux, lorsqu'une couleur allant du blanc au rosé est recherchée.

Parmi les céréales, le maïs est largement utilisé comme matière première de l'alimentation des veaux. D'ailleurs, les éleveurs et les producteurs ont pour objectif d'en augmenter la part dans l'alimentation des veaux. En effet, le maïs présente une bonne digestibilité, une bonne appétence et d'excellentes propriétés nutritionnelles, comme par exemple une teneur en fer naturellement basse, typiquement de l'ordre de 30 mg/kg à 40 mg/kg, et un bon équilibre entre la teneur en matière grasse et la teneur en amidon, ainsi qu'une bonne valeur énergétique. Toutefois, comme mentionné plus haut et malgré le fait que le maïs présente une teneur en fer relativement faible, augmenter la proportion de cette céréale dans la ration alimentaire engendre inévitablement une trop forte teneur en fer. Une utilisation d'une telle alimentation s'oppose donc à l'obtention d'une viande de couleur blanche-rosée pourtant recherchée notamment par les consommateurs. Cette problématique est d'autant plus marquée avec d'autres céréales, avec des oléagineux et avec des légumineuses dont les teneurs en fer peuvent être supérieures à celles relevées pour le maïs.

Il existe donc un réel besoin de mettre au point et de proposer une alimentation comprenant une fraction de grains cultivés (de céréales, d'oléagineux et/ou de légumineuses) présentant une teneur réduite en fer tout en conservant de bonnes propriétés nutritionnelles, notamment un bon équilibre entre la teneur en matière grasse et la teneur en amidon, une bonne digestibilité, une bonne appétence, et une bonne valeur énergétique, cette alimentation pouvant être donnée aux animaux en des proportions plus élevées. Il demeure en outre le besoin de proposer un procédé pour la fabrication de cette fraction présente dans l'alimentation. Enfin, il demeure un besoin de mettre au point des produits transformés de ladite fraction présentant une teneur réduite en fer, tout en conservant également de bonnes propriétés nutritionnelles, une bonne digestibilité et une bonne appétence, et une bonne valeur énergétique.

**Résumé de l'invention**

Etonnamment, le demandeur a trouvé que le procédé de la présente invention permet d'obtenir une fraction de grains présentant une teneur en fer réduite par rapport à la teneur initiale en fer des grains entiers, tout en conservant de bonnes propriétés nutritionnelles, notamment une teneur appropriée en matière grasse et en amidon, une bonne digestibilité et une bonne appétence, ainsi qu'une bonne valeur énergétique.

Plus particulièrement, pour faire face aux besoins mentionnés ci-dessus, l'invention porte sur un procédé d'obtention et sur une utilisation, au départ de grains entiers choisis dans le groupe constitué d'au moins un grain de céréale, d'au moins un grain d'oléagineux, d'au moins un grain de légumineuse et d'un mélange de ces derniers, d'une fraction de grains (F) présentant une teneur en fer réduite d'au moins 25% en poids par rapport à une teneur en fer initiale desdits grains entiers, ledit procédé comprenant les étapes suivantes :

Etape 1 : une étape de traitement desdits grains entiers,

Etape 2 : une étape de séparation desdits grains traités à l'étape 1 de telle sorte à obtenir une première fraction de grains ($F_1$) comprenant des premiers fragments de grains présentant une taille de particules supérieure à une ou des valeurs seuils prédéterminées de taille de particules et une deuxième fraction de grains ($F_2$) comprenant des deuxièmes fragments de grains présentant une taille de particules inférieure à ladite ou lesdites valeurs seuils prédéterminées de taille de particules, et

Etape 3 : une étape de séparation de ladite première fraction de grains ($F_1$) obtenue à l'étape 2, sur base de la taille et/ou de la forme desdits premiers fragments, de telle sorte à isoler ladite fraction de grains (F) présentant ladite teneur en fer réduite.

Avantageusement, selon le procédé suivant l'invention, la fraction de grains (F) présente une teneur en fer réduite d'au moins 40% en poids, de préférence d'au moins 45% en poids, de préférence d'au moins 50% en poids, de préférence d'au moins 55% en poids, de préférence d'au moins 60% en poids par rapport à la teneur en fer initiale du grain entier.

De préférence, selon le procédé suivant l'invention, ladite fraction de grains (F) est obtenue au départ de grains entiers étant des grains de maïs.

Préférentiellement, selon le procédé suivant l'invention, ladite fraction de grains (F) obtenue au départ de grains entiers étant des grains de maïs présente une teneur en fer réduite maximale de 30,0 mg/kg, de préférence une teneur en fer réduite maximale de 25,0 mg/kg, préférentiellement une teneur en fer réduite maximale de 20,0 mg/kg, plus préférentiellement une teneur en fer réduite maximale de 15,0 mg/kg, de préférence une teneur en fer réduite maximale de 13,0 mg/kg, préférablement une teneur en fer réduite maximale de 12,5 mg/kg, plus préférablement une teneur en fer réduite maximale de 12,0 mg/kg.Avantageusement, selon le procédé suivant l'invention, ladite fraction de grains (F) présente une distribution granulométrique telle que :

$$D_{90} \geq 1000 \ \mu m \ et \ D_{90} \leq 6000 \ \mu m \ et \ D_{99,5} \leq 7000 \ \mu m.$$

De préférence, selon le procédé suivant l'invention, ladite étape 1 de traitement de grains entiers désigne une fragmentation réalisée par un broyage, par un traitement par friction et/ou par un traitement abrasif des grains entiers.

Préférentiellement, selon le procédé suivant l'invention, l'étape 1 est précédée ou suivie d'une étape de conditionnement des grains.

Avantageusement, selon le procédé suivant l'invention, ladite étape de conditionnement des grains comprend une ou plusieurs étapes de nettoyage, une ou plusieurs étapes d'humidification et/ou une ou plusieurs étapes de polissage.

De préférence, selon le procédé suivant l'invention, ladite étape 2 de séparation est réalisée au moyen d'un dispositif muni d'un écran perforé dont les perforations présentent une forme rectangulaire ou ovale.

Préférentiellement, selon le procédé suivant l'invention, lesdites perforations présentant une forme rectangulaire ou ovale présentent une longueur qui n'est pas inférieure à 3,0 mm, de préférence pas inférieure à 5,0 mm, de préférence pas inférieure à 7,0 mm, de préférence pas inférieure à 10,0 mm, de préférence pas inférieure à 12,0 mm, ladite longueur n'étant pas non plus supérieure à 30,0 mm, de préférence pas non plus supérieure à 25,0 mm, de préférence pas non plus supérieure à 20,0 mm, de préférence pas non plus supérieure à 18,0 mm, de préférence pas non plus supérieure à 15,0 mm, de préférence pas non plus supérieure à 14,0 mm, de préférence pas non plus supérieure à 13,0 mm, de préférence pas non plus supérieure à 12,0 mm.

De façon avantageuse, selon le procédé suivant l'invention, lesdites perforations présentant une forme rectangulaire ou ovale présentent une largeur qui n'est pas inférieure à 0,5 mm, de préférence pas inférieure à 0,75 mm, de préférence pas inférieure à 1,0 mm, de préférence pas inférieure à 1,2 mm, ladite largeur n'étant pas non plus supérieure à 6,0 mm, de préférence pas non plus supérieure à 5,0 mm, de préférence pas non plus supérieure à 4,0 mm, de préférence pas non plus supérieure à 3,0 mm, de préférence pas non plus supérieure à 2,5 mm, de préférence pas non plus supérieure à 2,0 mm, de préférence pas non plus supérieure à 1,5 mm, de préférence pas non plus supérieure à 1,2 mm.

Avantageusement, selon le procédé suivant l'invention, ladite fraction de grains ($F_2$) représente au plus 50% en poids, de préférence au plus 45% en poids, de préférence au plus 40% en poids, de préférence au plus 35% en poids par rapport au poids total des grains entiers.

De préférence, selon le procédé suivant l'invention, la fraction ($F_2$) représente au moins 15% en poids, de préférence au moins 20% en poids, de préférence au moins 25% en poids par rapport au poids total des grains entiers.

Préférentiellement, selon le procédé suivant l'invention, la séparation de la première fraction ($F_1$) de l'étape 3 comprend une séparation mécanique.

De façon avantageuse, selon le procédé suivant l'invention, ladite séparation mécanique est effectuée à l'aide d'un tamis ou d'une pluralité de tamis présentant des mailles de tailles différentes.

De préférence, selon le procédé suivant l'invention, une fraction de grains intermédiaire [ci-après nommée fraction de grains (F')] est collectée entre un tamis en position inférieure et un tamis en position supérieure, si ledit tamis en position supérieure est présent, ou sur le tamis en position inférieure si un seul tamis est utilisé.

Préférentiellement, selon le procédé suivant l'invention, ladite fraction de grains (F) est obtenue en soumettant la fraction (F') à une étape de séparation ultérieure en soustrayant une fraction de grains ($F_4$).

Avantageusement, selon le procédé suivant l'invention, ladite étape de séparation ultérieure est réalisée à l'aide de moyens d'aspirations.

De façon avantageuse, selon le procédé suivant l'invention, une fraction de grains ($F_3$) est collectée après avoir traversé l'ensemble des tamis, spécifiquement après avoir traversé un tamis en position inférieure.

De préférence, selon le procédé suivant l'invention, la fraction de grains (F) représente au maximum 80% en poids, de préférence au maximum 75% en poids, préférablement au maximum 70% en poids par rapport au poids total des grains entiers.

Préférentiellement, selon le procédé suivant l'invention, la fraction de grains (F) représente au moins 45% en poids, de préférence au moins 50% en poids, de préférence au moins 55% en poids par rapport au poids total des grains entiers.

La présente invention porte également sur une fraction de grains (F) présentant une teneur en fer réduite d'au moins 25% en poids, de préférence d'au moins 30% en poids, de préférence d'au moins 35% en poids, de préférence d'au moins 40% en poids, de préférence d'au moins 45% en poids, de préférence d'au moins 50% en poids, de préférence d'au moins 55% en poids, de préférence d'au moins 60% en poids par rapport à la teneur en fer initiale du grain entier.

De préférence, selon l'invention, ladite fraction de grains (F) présente une distribution granulométrique telle que :

$$D_{90} \geq 1000 \ \mu m \ et \ D_{90} \leq 6000 \ \mu m \ et \ D_{99,5} \leq 7000 \ \mu m.$$

La présente invention porte également sur une fraction de grains (F) obtenue selon le procédé suivant l'invention.

La présente invention porte également sur un procédé de transformation d'une fraction de grains (F) obtenue selon le procédé suivant l'invention de telle façon à obtenir un produit transformé.

De préférence, ledit procédé de transformation selon l'invention, comprend une étape choisie parmi le groupe consistant en un broyage, un aplatissage, un toastage, un floconnage, une extrusion, une granulation, une micronisation et un procédé d'expansion.

La présente invention porte également sur un produit transformé selon le procédé de transformation suivant l'invention, ledit produit transformé présentant une teneur en fer réduite d'au moins 25% en poids, de préférence d'au moins 30% en poids, de préférence d'au moins 35% en poids, de préférence d'au moins 40% en poids, de préférence d'au moins 45% en poids, de préférence d'au moins 50% en poids, de préférence d'au moins 55% en poids, de préférence d'au moins 60% en poids par rapport à la teneur en fer initiale du grain entier.

Avantageusement, ledit produit transformé selon l'invention est un flocon, un extrudé, un granulé, un produit micronisé, un produit toasté ou un produit expandé.

La présente invention porte aussi sur une utilisation de la fraction (F) suivant l'invention ou du produit transformé selon l'invention dans le domaine de la brasserie, de la production d'alcool de fermentation, le domaine agroalimentaire, de la boulangerie-pâtisserie, et/ou l'alimentation animale.

Avantageusement, l'utilisation de la fraction (F) suivant l'invention ou du produit transformé selon l'invention est destinée à des animaux qui sont des animaux d'élevage.

De préférence, selon l'invention, lesdits animaux sont des bovins, de préférence des veaux, préférentiellement des veaux de boucherie.

La présente invention porte également sur un composé issu de la fraction de grains (F) suivant l'invention entrant dans la composition d'une alimentation animale.

Avantageusement, l'utilisation du composé issu de la fraction de grains (F) suivant l'invention est destinée à des animaux qui sont des animaux d'élevage.

De préférence, selon l'invention, lesdits animaux sont des bovins, de préférence des veaux, préférentiellement des veaux de boucherie.

## Description détaillée de l'invention

### *Procédé d'obtention de la fraction (F)*

Comme déjà indiqué ci-dessus, le grain entier utilisé peut être un grain de céréale, un grain oléagineux ou un grain de légumineuse.

Des exemples typiques et non limitatifs de grain de céréale sont les grains de maïs, le blé, l'orge, le riz, l'avoine, l'épeautre, le seigle, le triticale et les dérivés de ceux-ci.

Les dérivés du maïs peuvent désigner le maïs sucré et le popcorn.

Les dérivés de l'avoine peuvent désigner l'avoie nue, l'avoine pelée et l'avoine décortiquée.

Les dérivés de l'épeautre peuvent désigner l'épeautre pelée.

Un exemple typique et non limitatif de grain d'oléagineux est le grain de soja.

Des exemples typiques et non limitatifs de grains de légumineuses sont le lupin, les pois, la féverole et les haricots en général.

De préférence, le grain entier utilisé afin d'obtenir une alimentation destinée aux animaux et qui repose sur une utilisation d'une fraction de grains (F) selon l'invention est un grain de céréale.

De préférence, la céréale utilisée afin d'obtenir une alimentation destinée aux animaux et qui repose sur une utilisation d'une fraction de grains (F) selon l'invention est le maïs et les dérivés de celui-ci, ou le blé. Plus préférablement, la céréale utilisée afin d'obtenir une alimentation destinée aux animaux et qui repose sur une utilisation d'une fraction de grains (F) selon l'invention est le maïs.

Le maïs est souvent utilisé comme matière première de l'alimentation des veaux, ceci en raison de sa bonne digestibilité, de son goût et de ses propriétés nutritionnelles, par exemple en raison de son faible taux de matière grasse et de sa teneur naturelle en fer relativement basse.

Avantageusement, le maïs peut être traité thermiquement, plus particulièrement afin d'être transformé en flocons de maïs, dans le but d'améliorer sa digestibilité et son goût et de réduire encore davantage sa teneur en fer, tout en maintenant une faible teneur en matière grasse.

Dans le cadre de la présente invention, les expressions « le grain » ou « les grains » sont utilisées de façon indifférente.

Dans le cadre de la présente invention, les expressions « le grain » ou « la graine » sont utilisées de façon indifférente.

Dans le cadre de la présente invention, il a été déterminé, de façon surprenante, que la fraction de grains (F) issue du procédé de la présente invention présente une teneur en fer réduite d'au moins 25% en poids, de préférence d'au moins 30% en poids, de préférence d'au moins 35% en poids, de préférence d'au moins 40% en poids, de préférence d'au moins 45% en poids, préférablement d'au moins 50% en poids, préférentiellement d'au moins 55% en poids, plus préférentiellement d'au moins 60% en poids par rapport à la teneur en fer initiale du grain entier.

La teneur en fer peut être mesurée par spectroscopie, par exemple par spectroscopie utilisant un plasma à couplage inductif selon la méthode standard ISO27085:20 ou par exemple par spectroscopie de fluorescence des rayons X, et peut être exprimée en mg/kg.

Le fer, bien qu'indésirable en proportions trop importantes dans certains types d'alimentation animale, en particulier dans l'alimentation destinée aux veaux de boucherie, est néanmoins accepté, voire souhaitable, en de petites quantités. En effet, le fer est indispensable dans l'alimentation des animaux d'élevage afin d'assurer certaines fonctions métaboliques comme déjà indiqué plus haut.

Il est entendu au sens de la présente invention que la teneur en fer dans la fraction de grains (F) est au minimum de 1,0 mg/kg, de préférence au minimum de 2,0 mg/kg, de préférence au minimum de 2,5 mg/kg.

Typiquement, les grains de maïs entiers présentent une teneur en fer allant de 10,0 mg/kg à 50,0 mg/kg, dépendant des variétés et des sols où le maïs est cultivé.

Dans une forme de réalisation préférée de la présente invention, lorsque la fraction de grains (F) est issue de grains de maïs entiers (ci-après dénommée fraction de grains (F) de maïs) présente une teneur réduite en fer par rapport à la teneur en fer initiale du grain de maïs entier. La teneur en fer réduite de la fraction de grains (F) de maïs peut être d'au moins 1,0 mg/kg, de préférence d'au moins 2,0 mg/kg, de préférence d'au moins 2,5 mg/kg.

En outre, la teneur en fer réduite de la fraction de grains (F) de maïs est au maximum de 30,0 mg/kg, de préférence au maximum de 25,0 mg/kg, préférentiellement au maximum de 20,0 mg/kg, plus préférentiellement au maximum de 15,0 mg/kg, de préférence au maximum de 13,0 mg/kg, préférablement au maximum de 12,5 mg/kg, plus préférablement au maximum de 12,0 mg/kg.

De bons résultats ont été obtenus pour une teneur en fer réduite dans la gamme de 2,5 à 13,0 mg/kg dans la fraction de grains (F) de maïs.

Dans le cadre de l'invention, la viande des animaux nourris avec une fraction de grains (F) obtenue selon le procédé de la présente invention présente une couleur rosée à claire, de préférence correspondant au maximum à une teinte de classe 3, de préférence au maximum à une teinte de classe 2, de préférence à une teinte de classe 1 sur la grille de classement de l'Office national interprofessionnel des viandes de l'élevage et de l'aviculture (OFIVAL, Paris) (Elaboration et construction du nouveau nuancier de couleur de la viande de veau, Compte-rendu final n° 00 10 32 009 du Département Techniques d'élevage et Qualité, Institut de l'élevage, 2010, page 42).

Les valeurs de teneur en fer réduite de la fraction de grains (F) sont également applicables aux produits transformés issus de ladite fraction de grains (F), comme expliqué en détails ci-après.

Lors de l'étape 1 du procédé de la présente invention, le grain entier choisi dans le groupe constitué d'au moins un grain de céréale, d'au moins un grain d'oléagineux, d'au moins un grain de légumineuse et d'un mélange de ces derniers est soumis à un traitement. Dans le contexte de la présente invention, le traitement désigne l'action de réduire un grain entier ou un dérivé de ce dernier en au moins deux fragments de grain, de façon à obtenir au moins des premiers fragments de grains et au moins des deuxièmes fragments de grains. Ainsi, les grains peuvent être traités dans toute unité conventionnelle de traitement de grains permettant de réduire un grain entier en au moins deux fragments de grain.

Dans le contexte de la présente invention, l'expression « au moins deux fragments de grains» désigne « deux fragments de grains ou plus ».

Des exemples typiques de traitement de grains sont décrits dans le document WO 2005/108533 A2, l'ensemble du contenu de cette demande étant incorporé ici par référence à toutes fins.

Dans le contexte de la présente invention, le traitement de l'étape 1 désigne la fragmentation des grains entiers optionnellement conditionnés.

Spécifiquement, la fragmentation peut être réalisée en écrasant les grains entiers, par un traitement de friction, par traitement abrasif, et/ou en découpant les grains entiers, de préférence par un traitement de friction et/ou un traitement abrasif, plus préférentiellement par un traitement abrasif.

Les grains entiers peuvent par exemple être écrasés contre ou sous une meule, ou entre deux rouleaux.

Un traitement par friction peut par exemple être effectué dans un dispositif dans lequel les grains sont mis au contact d'une ou plusieurs surfaces mobiles. Dans le cas d'un traitement abrasif, les grains sont mis au contact d'une ou plusieurs surfaces mobiles présentant des protubérances en barre, en pointe, arrondies, ou de toute autre forme.

Des exemples de machines pouvant réaliser un traitement abrasif des grains sont la machine MHXM de Bühler, la machine « maize degermer VBF10AM » de Satake, ou encore un décortiqueur M300, M301 ou M350 de la société CMF.

Il est bien entendu que l'homme du métier mettra en oeuvre le traitement abrasif, en utilisant la machine MHXM de Bühler selon la pratique générale, notamment en appliquant tous les paramètres optimaux (nombre de barres d'impact, pression entre les rouleaux, ...), à condition que les fractions de grains ($F_1$) et ($F_2$) soient formées, tel que décrites en détail ci-dessous.

Selon l'invention, ladite étape de traitement peut également comprendre un conditionnement desdits grains entiers. Un tel conditionnement peut avoir lieu préalablement à l'étape 1 ou suite à l'étape 1.

Le conditionnement, qu'il soit effectué avant l'étape 1 ou après l'étape 1, peut comprendre par exemple une ou plusieurs étapes de nettoyage, une ou plusieurs étapes d'humidification et/ou une ou plusieurs étapes de polissage.

L'étape de nettoyage est réalisée afin de retirer les éléments indésirables des grains. Des exemples non limitatifs d'éléments indésirables dans le procédé peuvent être les cailloux, les graviers, le sable, le verre et autres matériaux de densité élevée, la paille et autres éléments d'origine végétale qui ne sont pas les grains souhaités, les matériaux d'origine animale, la poussière, la terre, le papier, le carton, les métaux, les grains n'ayant pas la couleur souhaitée, ...

Eventuellement, l'étape de nettoyage peut être réalisée de telle façon que des substances indésirables et/ou toxiques comme par exemple des mycotoxines ou des (résidus de) produits phytopharmaceutiques (pesticides, herbicides,...) soient éliminés au moins partiellement.

Le nettoyage peut être réalisé dans une unité de nettoyage conventionnelle.

Le nettoyage peut comporter une étape de lavage à l'eau, une étape d'aspiration par flux d'air circulant à travers les grains, ou une combinaison des deux.

Dans le cas d'un lavage à l'eau, l'eau peut être sous différentes formes, par exemple sous forme gazeuse, liquide ou constituer une solution aqueuse. Optionnellement, des additifs pourraient être ajoutés à l'eau. Parmi les additifs pouvant être ajoutés à l'eau, on peut mentionner des acides et des surfactants.

Des exemples non limitatifs de dispositifs de nettoyage peuvent être un tamis à tambour, un tambour magnétisé, un silo dans une cuve pouvant avoir un axe central, une épierreuse, et/ou un classificateur, un détecteur de métaux non-ferreux, un détecteur de couleur ou encore un tamis. Toutes ces unités peuvent être fournies notamment par la société Bühler GmbH.

Dans une forme particulièrement avantageuse, le nettoyage est réalisé avec un flux d'air circulant.

Quand une étape de conditionnement est réalisée, un séparateur MTRA et/ou une épierreuse MTSC de la société Bühler GmbH pourrait avantageusement être utilisé.

Avantageusement, les éléments indésirables peuvent être aspirés dans un canal d'aspiration au sortir de l'unité de nettoyage et/ou de nettoyage préliminaire, où ils sont collectés et séparés de l'espace où se déroule le procédé de la présente invention.

Selon un mode de réalisation du procédé de la présente invention, ledit conditionnement du grain peut optionnellement comprendre une étape d'humidification desdits grains entiers pour obtenir un grain présentant un certain taux d'humidité. Typiquement, les grains de maïs entiers présentent un taux d'humidité compris entre 6% et 35% en poids par rapport au poids du grain de maïs entier.

Optionnellement, si le taux d'humidité est inférieur à 15% en poids, par rapport au poids du grain de maïs entier, ledit taux d'humidité pourrait être augmenté d'au moins 0,5% en poids, de préférence d'au moins 1,0% en poids, préférablement d'au moins 1,5% en poids, plus préférablement d'au moins 2,0% en poids par rapport au poids dudit grain de maïs entier.

Ladite étape d'humidification peut être réalisée selon les procédés connus de l'état de l'art.

Avantageusement, le grain entier est humidifié avec de l'eau, de préférence avec de l'eau à température ambiante. L'humidité peut être absorbée dans le grain pendant un laps de temps déterminé.

Dans une forme de réalisation particulièrement avantageuse de la présente invention, les grains peuvent être introduits dans une vis tournante sous de l'eau vaporisée pendant environ 90 secondes.

Selon un autre mode de réalisation suivant l'invention, ledit conditionnement du grain peut comprendre une étape de polissage réalisée par exemple en soumettant le grain entier à une série de compressions et de relaxations, afin d'assouplir l'enveloppe du grain entier par frottement.

Avantageusement, l'étape de polissage peut être effectuée dans une machine de polissage bien connue de l'état de la technique, comme par exemple la machine de polissage Mist Polisher de la société Satake.

Avantageusement, la machine de polissage pourrait comprendre un rotor excentrique rotatif entouré d'une chambre entourée d'un écran polygonal perforé. A chaque rotation du rotor, l'espace entre ledit rotor et l'écran provoque une alternance de cycles de compression et de relaxation, produisant une action de frottement sur le grain.

Les grains ainsi conditionnés, c'est-à-dire par exemple nettoyés et/ou humidifiés et/ou ayant subi un polissage, peuvent ensuite être traités comme décrit ci-dessus selon le procédé de la présente invention.

A l'étape 2 du procédé selon l'invention, les grains, une fois traités suivant l'étape 1 du procédé suivant l'invention et optionnellement conditionnés, sont ensuite séparés en deux fractions, selon une ou des valeurs seuils de taille de particules. Plus spécifiquement, les grains sont séparés en une première fraction de grains ($F_1$) comprenant des premiers fragments de grains présentant une taille de particules supérieure à une ou des valeurs seuils prédéterminées de taille de particules et une deuxième fraction de grains ($F_2$) comprenant des deuxièmes fragments de grains présentant une taille de particules inférieure à ladite ou lesdites valeurs seuils prédéterminées de taille des particules.

Dans une forme de réalisation préférée du procédé de la présente invention, l'étape 2 peut être réalisée à l'aide d'un dispositif muni d'un écran perforé.

Dans cette forme de réalisation, les grains traités à l'étape 1 et optionnellement conditionnés sont introduits dans ledit dispositif muni d'un écran perforé. Ce dispositif est agencé pour retenir les fragments de grains présentant une taille de particules de taille supérieure à une ou des valeurs seuils prédéterminées de taille de particules, ces fragments retenus formant la fraction ($F_1$). En parallèle, ce dispositif est agencé pour laisser passer les fragments de grains présentant une taille de particules de taille inférieure à ladite ou lesdites valeurs seuils, ces fragments passant au travers du dispositif formant la fraction ($F_2$).

Typiquement, l'écran perforé du dispositif peut être un écran en métal, en polymère, en bois, ou en tout autre type de matériau.

Typiquement, l'écran perforé comprend au moins une perforation pouvant être de tout type de forme, par exemple un hexagone, un pentagone, un octogone, un carré, un rectangle, un cercle, un triangle, un ovale. De préférence, la perforation présente la forme d'un rectangle et/ou d'un ovale.

Avantageusement, la longueur de la perforation rectangulaire ou la longueur de la perforation ovale est d'au moins 3,0 mm, de préférence d'au moins 5,0 mm, préférablement d'au moins 7,0 mm, plus préférablement d'au moins 10,0 mm, de préférence d'au moins 12,0 mm.

Avantageusement, la longueur de la perforation rectangulaire ou la longueur de la perforation ovale est d'au plus 30,0 mm, de préférence d'au plus 25,0 mm, de préférence d'au plus 20,0 mm, de préférence d'au plus 18,0 mm, préférablement d'au plus 15,0 mm, plus préférablement d'au plus 14,0 mm, de préférence d'au plus 13,0 mm, préférablement d'au plus 12,0 mm.

Dans le contexte de la présente demande, les termes « longueur de la perforation ovale» et « largeur de la perforation ovale » désignent respectivement la dimension correspondant à la longueur et à la largeur d'une perforation rectangulaire dans laquelle cet ovale serait inscrit.

Avantageusement, la largeur de la perforation rectangulaire ou la largeur de la perforation ovale est d'au moins 0,5 mm, de préférence d'au moins 0,75 mm, de préférence d'au moins 1,0 mm, préférablement d'au moins 1,2 mm.

Avantageusement, la largeur de la perforation rectangulaire ou la largeur de la perforation ovale est d'au plus 6,0 mm, de préférence d'au plus 5,0 mm, de préférence au plus 4,0 mm, de préférence d'au plus 3,0 mm, préférablement d'au plus 2,5 mm, plus préférablement d'au plus 2,0 mm, de préférence d'au plus 1,5 mm, préférablement d'au plus 1,2 mm.

Il est entendu que l'homme du métier utilise la taille optimale de perforations du dispositif muni d'un écran perforé de l'étape 2, cette taille étant adaptée au type de grain cultivé utilisé et issu de l'étape 1.

Par exemple, dans le cas des grains de maïs, la longueur de la perforation rectangulaire ou ovale est avantageusement comprise entre 5,0 mm et 18,0 mm, de préférence entre 7,0 mm et 15,0 mm, plus préférablement entre 10,0 mm et 14,0 mm.

Toujours dans le cas des grains de maïs, la largeur de la perforation rectangulaire ou ovale est avantageusement comprise entre 0,5 mm et 5,0 mm, de préférence entre 0,75 mm et 3,0 mm, plus préférablement entre 1,0 mm et 2,0 mm.

Le dispositif muni d'un écran perforé peut par exemple se présenter sous la forme d'une gaine filtrante.

Dans une forme de réalisation avantageuse du procédé de la présente invention, l'étape 1 et l'étape 2 du procédé peuvent être réalisées dans la même unité de traitement. Dans ce cas, l'unité de traitement utilisée à l'étape 1 peut par exemple comporter un dispositif muni d'un écran perforé.

Dans une forme de réalisation particulièrement avantageuse de la présente invention, les grains optionnellement conditionnés sont soumis à l'étape 1 et à l'étape 2 dans une machine MHXM de la société Bühler.

Dans une forme de réalisation alternative du procédé selon l'invention, dans l'étape 2, les grains, une fois traités suivant l'étape 1 du procédé suivant l'invention et optionnellement conditionnés, sont ensuite séparés en deux fractions, selon une ou des valeurs seuils de densité. Plus spécifiquement, les grains sont séparés en une première fraction de grains ($F_1$) comprenant des premiers fragments de grains présentant une densité supérieure à une valeur seuil prédéterminée de densité et une deuxième fraction de grains ($F_2$) comprenant des deuxièmes fragments de grains présentant une densité inférieure à une valeur seuil prédéterminée de densité.

Parmi les procédés permettant une séparation par densité, on peut mentionner la centrifugation et la séparation par aspiration.

Dans une forme de réalisation du procédé de la présente invention, la deuxième fraction de grains ($F_2$) est directement collectée après l'étape 2.

Dans une forme de réalisation alternative, la deuxième fraction de grains ($F_2$) est aspirée au sortir du dispositif d'écran perforé par un canal d'aspiration pour être collectée dans un espace séparé de l'espace où se déroule l'étape 2.

Optionnellement, la deuxième fraction de grains ($F_2$) circule de préférence à travers un cyclone après sa sortie de l'étape 2 et avant d'être collectée.

Dans une forme de réalisation avantageuse de la présente invention, la fraction de grains ($F_2$) représente au maximum 50% en poids, de préférence au maximum 45% en poids, préférablement au maximum 40% en poids, plus préférablement au maximum 35% en poids par rapport au poids total des grains entiers.

Dans une forme de réalisation avantageuse de la présente invention, la fraction de grains ($F_2$) représente au moins 15% en poids, de préférence au moins 20% en poids, préférablement au moins 25% en poids par rapport au poids total des grains entiers.

Dans une forme de réalisation avantageuse de la présente invention, la fraction de grains ($F_2$) de maïs représente au maximum 45% en poids, de préférence au maximum 40% en poids par rapport au poids total des grains entiers.

Dans une forme de réalisation avantageuse de la présente invention, la fraction de grains ($F_2$) de maïs représente au moins 15% en poids, de préférence au moins 20% en poids, préférablement au moins 25% en poids par rapport au poids total des grains entiers.

La fraction ($F_2$) peut optionnellement être utilisée comme nourriture animale.

A l'étape 3 du procédé suivant l'invention, est réalisée une deuxième séparation portant sur ladite première fraction de grains ($F_1$) obtenue à l'étape 2, de telle sorte à isoler ladite fraction de grains (F) présentant ladite teneur en fer réduite. Plus particulièrement, une séparation réalisée sur base de la taille et/ou de la forme est réalisée selon cette troisième étape du procédé suivant l'invention : la première fraction de grains ($F_1$) est séparée en au moins deux fractions, la fraction de grains (F) obtenue à la fin de cette étape 3 étant l'une de ces au moins deux fractions.

Dans une forme de réalisation particulièrement avantageuse de la présente invention, la séparation de la première fraction de grains ($F_1$) de l'étape 3 comprend une séparation mécanique.

Dans une forme de réalisation particulière de la présente invention, la séparation de l'étape 3 est une séparation par tamisage. Une séparation par tamisage peut par exemple avoir lieu dans une machine de type séparateur. Avantageusement, le tamisage mécanique peut être effectué à l'aide d'un ou d'un ensemble de tamis présentant des mailles de tailles différentes.

Les tamis peuvent être agencés de différentes façons. Entre autres, les tamis peuvent être superposés de façon verticale, ou alignés successivement le long d'une pente inclinée, ou positionnés selon une combinaison de ces deux agencements.

Il est entendu que le tamis présentant la plus grande taille de mailles sera situé en une position supérieure, les tamis étant positionnés par taille de mailles décroissante du haut vers le bas. Le tamis présentant la plus petite taille de mailles se trouve donc en position inférieure.

Avantageusement, l'ensemble de tamis comporte de 2 à 7 tamis, de préférence de 2 à 6 tamis, de préférence de 2 à 5 tamis, préférablement de 2 à 4 tamis, plus préférablement de 2 à 3 tamis, préférentiellement 2 tamis.

Dans une forme de réalisation préférée de la présente invention, la taille des mailles du tamis en position inférieure est d'au moins 500 l1m, de préférence d'au moins 750 $\mu$m, de préférence d'au moins 1000 $\mu$m, de préférence d'au moins 1100 $\mu$m, de préférence d'au moins 1200 $\mu$m, préférablement d'au moins 1300 $\mu$m, plus préférablement d'au moins 1400 $\mu$m, préférentiellement d'au moins 1500 $\mu$m.

En outre, il est entendu que la taille des mailles du tamis en position supérieure est d'au plus 10 000 $\mu$m, de préférence d'au plus 9000 $\mu$m, de préférence d'au plus 8000 $\mu$m, de préférence d'au plus 7000 $\mu$m, de préférence d'au plus 6000 $\mu$m, de préférence d'au plus 5600 $\mu$m.

Alternativement, un seul tamis pourrait être utilisé à la place d'un ensemble de tamis.

Dans le cas où un seul tamis est utilisé, la taille des mailles de ce tamis est d'au moins 500 pm , de préférence d'au moins 750 $\mu$m, de préférence d'au moins 1000 $\mu$m, de préférence d'au moins 1100 $\mu$m, de préférence d'au moins 1200 $\mu$m, préférablement d'au moins 1300 $\mu$m, plus préférablement d'au moins 1400 $\mu$m, préférentiellement d'au moins 1500 $\mu$m.

Dans l'étape 3 du procédé de la présente invention, la première fraction de grains ($F_1$) est séparée en au moins deux fractions, comme indiqué ci-dessus. Une fraction de grains intermédiaire [ci-après nommée fraction de grains (F')] peut être collectée entre le tamis en position inférieure et le tamis en position supérieure, si ledit tamis en position supérieure est présent, ou sur le tamis en position inférieure si un seul tamis est utilisé. La fraction ayant traversé l'ensemble de tamis, spécifiquement le tamis en position inférieure tel que décrit ci-dessus est nommée fraction de grains ($F_3$).

Les fragments n'ayant pas traversé le tamis en position supérieure, s'il est présent, forment une fraction comprenant les fragments de taille supérieure à la taille des mailles du tamis en position supérieure.

La fraction de grains (F) telle que décrite ci-dessus peut être obtenue en soumettant la fraction (F') à une étape de séparation ultérieure, de telle façon à en soustraire une fraction de grains ($F_4$).

Dans le cadre de la présente invention, les inventeurs ont constaté que la fraction de grains ($F_4$) comprend généralement les enveloppes des grains et les germes des grains de petite taille. Il est bien connu que les enveloppes des grains peuvent contenir des mycotoxines. Typiquement, les mycotoxines sont indésirables car elles peuvent causer des intoxications alimentaires aiguës, de l'infertilité, et/ou d'autres troubles métaboliques, notamment chez les animaux d'élevage.

Ceci étant dit, les inventeurs ont étonnamment trouvé que la fraction de grains (F) obtenue selon le procédé de l'invention présente une concentration réduite en mycotoxines.

L'expression « concentration réduite en mycotoxines » correspond dans le contexte de la présente demande à une concentration en mycotoxines réduite d'au moins 30% par rapport à la concentration en mycotoxines initiale.

Dans une forme de réalisation avantageuse du procédé de la présente invention, l'étape de séparation ultérieure permettant de soustraire une fraction de grains ($F_4$) de la fraction de grains (F') peut être réalisée à l'aide de moyens d'aspirations. Un exemple de moyen d'aspiration est un canal d'aspiration d'air.

Dans un mode de réalisation particulier de l'étape 3 du procédé de la présente invention, la fraction de grains (F) est obtenue en utilisant une machine de type séparateur.

Parmi les machines de type séparateur pouvant être utilisées lors de l'étape 3 selon l'invention, on peut mentionner les machines MTRA et MTRB, toutes deux provenant de la société Bühler GmbH.

Les différentes fractions de grains (F), ($F_3$) et ($F_4$) peuvent être collectées et leurs proportions en pourcentage en poids par rapport au poids total des grains entiers peuvent être calculées.

Dans le procédé de la présente invention, la fraction de grains (F) représente avantageusement au moins 45% en poids, de préférence au moins 50% en poids, préférablement au moins 55% en poids par rapport au poids total des grains entiers.

Dans le procédé de la présente invention, la fraction de grains (F) représente avantageusement au maximum 80% en poids, de préférence au maximum 75% en poids, préférablement au maximum 70% en poids par rapport au poids total des grains entiers.

Dans le procédé de la présente invention, la fraction de grains ($F_3$) représente avantageusement moins de 10% en poids, de préférence moins de 8% en poids, préférablement moins de 5% en poids par rapport au poids total des grains entiers.

Lorsqu'elle est présente, la fraction de grains ($F_4$) représente avantageusement moins de 8% en poids, de préférence moins de 5% en poids, préférablement moins de 3% en poids par rapport au poids total des grains entiers.

Un mode de réalisation spécifique de l'étape 3 est décrit dans la partie expérimentale.

*La fraction de grains (F)*

Dans une forme de réalisation de la présente invention, la fraction de grains (F) comme décrite ci-dessus est obtenue grâce au procédé décrit ci-dessus. La fraction de grains (F) est également un aspect de la présente invention.

Il est en outre entendu que toutes les définitions et les préférences décrites ci-dessus s'appliquent également à cette forme de réalisation, ainsi qu'aux autres formes de réalisation décrites ci-dessous.

Les inventeurs ont trouvé, de façon surprenante, que la fraction de grains (F) de la présente invention présente une teneur en fer réduite d'au moins 25% en poids, de préférence d'au moins 30% en poids, de préférence d'au moins 35% en poids, de préférence d'au moins 40% en poids, de préférence d'au moins 45% en poids, préférablement d'au moins 50% en poids, préférentiellement d'au moins 55% en poids, plus préférentiellement d'au moins 60% en poids par rapport à la teneur en fer initiale du grain entier.

Il est entendu, au sens de la présente invention, que la teneur en fer dans la fraction de grains (F) est au minimum de 1,0 mg/kg, de préférence au minimum de 2,0 mg/kg, de préférence au minimum de 2,5 mg/kg.

Typiquement, les grains de maïs entiers présentent une teneur en fer allant de 10,0 mg/kg à 50,0 mg/kg, dépendant des variétés.

Dans une forme de réalisation préférée de la présente invention, la fraction de grains (F) de maïs présente une teneur réduite en fer par rapport à la teneur en fer initiale du grain de maïs entier. La teneur en fer de la fraction de grains (F) de maïs peut être d'au moins de 1,0 mg/kg, de préférence au minimum de 2,0 mg/kg, de préférence au minimum de 2,5 mg/kg.

En outre, la teneur en fer de la fraction de grains (F) de maïs est au maximum de 30,0 mg/kg, de préférence au maximum de 25,0 mg/kg, préférentiellement au maximum de 20,0 mg/kg, plus préférentiellement au maximum de 15,0 mg/kg, de préférence au maximum de 13,0 mg/kg, préférablement au maximum de 12,5 mg/kg, plus préférablement au maximum de 12,0 mg/kg.

Dans un mode de réalisation du procédé de la présente invention, ladite fraction de grains (F) obtenue au départ de grains entiers étant des grains de maïs présente, par rapport à la teneur initiale en fer desdits grains entiers, une teneur en fer qui a été réduite au maximum de 30,0 mg/kg, de préférence au maximum de 25,0 mg/kg, préférentiellement au maximum de 20,0 mg/kg, plus préférentiellement au maximum de 15,0 mg/kg.

Dans le cadre de la présente invention, il a été déterminé, de façon surprenante, que la fraction de grains (F), obtenue au départ de grains entiers soumis au procédé suivant l'invention, comprend des fragments de grains dont la teneur en matière grasse est réduite mais adéquate pour l'alimentation animale. Par les termes « réduite mais adéquate », il est entendu que la teneur en matière grasse de la fraction de grains (F) est réduite de l'ordre de 25% à 85% par rapport à la teneur initiale en matière grasse.

La teneur en matière grasse de la fraction de grains (F) peut par exemple être mesurée par la méthode Soxhlet et peut être exprimée en mg/kg ou en pourcentage.

Typiquement, un grain entier de maïs présente une teneur initiale en matière grasse de 4 à 5%.

Dans une forme de réalisation préférée de la présente invention, la fraction de grains (F) de maïs issue du procédé de la présente invention présente une teneur en matière grasse d'au moins 0,5%, de préférence d'au moins 1,0%, de préférence d'au moins 1,5%, préférablement d'au moins 2,0%.

La fraction de grains (F) de maïs issue du procédé de la présente invention présente une teneur en matière grasse d'au maximum 4%, de préférence d'au maximum 3%.

De bons résultats ont été obtenus pour une teneur en matière grasse dans la gamme de 2% à 3% dans la fraction de grains (F) de maïs.

Les valeurs de teneur en matière grasse de la fraction de grains (F) sont également applicables aux produits transformés de ladite fraction de grains (F), comme expliqué en détails plus bas.

Dans le cadre de la présente invention, il a été déterminé, de façon surprenante, que la fraction de grains (F), obtenue au départ de grains entiers soumis au procédé suivant l'invention, comprend des fragments de grains dont la teneur en amidon est augmentée mais adéquate pour l'alimentation animale. Par les termes « augmentée mais adéquate », il est entendu que la teneur en amidon de la fraction de grains (F) est augmentée d'au moins 3% en poids, de préférence d'au moins 4% en poids, préférablement d'au moins 5% en poids, plus préférablement d'au moins 6% en poids, préférentiellement d'au moins 8% en poids par rapport à la teneur en amidon des grains entiers mis en oeuvre à l'étape 1 du procédé suivant l'invention. Il est également entendu que la teneur en amidon de la fraction de grains (F) est augmentée d'au maximum 25% en poids, de préférence d'au maximum 20% en poids, préférablement d'au maximum 15% en poids, préférentiellement d'au maximum 10% en poids, plus préférentiellement d'au maximum 8% en poids par rapport à la teneur en amidon des grains entiers mis en oeuvre à l'étape 1 du procédé suivant l'invention. Ceci est particulièrement inattendu puisque les grains entiers peuvent être soumis, selon l'invention, à diverses contraintes comme par exemple un broyage, un nettoyage, une humidification ou encore un polissage. Or, malgré ces divers traitements et malgré les diverses étapes du procédé auxquelles sont soumis les grains entiers et les fractions de grains en dérivant, une teneur en amidon augmentée est observée pour la fraction de grains (F) par rapport à la teneur en amidon des grains entiers. Ceci est particulièrement avantageux puisque la teneur en amidon des grains entiers mais aussi de la fraction de grains (F) obtenue est adéquate en termes de nutrition des animaux d'élevage et en particulier des veaux de boucherie.

La teneur en amidon de la fraction de grains (F) peut par exemple être mesurée par méthode Ewers ou méthode enzymatique et peut être exprimée en mg/kg ou en pourcentage. Le protocole de méthode WV.FD.21 EG 152/2009 de la Commission Européenne peut par exemple être utilisé.

La fraction de grains (F) de maïs issue du procédé de la présente invention présente une teneur en amidon d'au moins 68 %, de préférence d'au moins 69%, préférablement d'au moins 70%, plus préférablement d'au moins 71 %.

La fraction de grains (F) de maïs issue du procédé de la présente invention présente une teneur en amidon d'au maximum 85%, de préférence d'au maximum 80%, préférablement d'au maximum 75%.

Les valeurs de teneur en amidon de la fraction de grains (F) sont également applicables aux produits transformés de ladite fraction de grains (F), comme expliqué en détails plus bas.

La valeur énergétique de la fraction de grains (F) est la quantité d'énergie pouvant en être retirée, par exemple lors de la digestion. La valeur énergétique s'évalue et se calcule sur base de l'ensemble des nutriments énergétiques, à savoir l'amidon, les sucres, les autres hydrates de carbone, les matières grasses et les protéines. Cette valeur énergétique peut être mesurée par bombe calorimétrique et peut être exprimée en kJ/kg ou en kcal/kg.

Typiquement la valeur énergétique brute d'un grain de maïs entier est comprise entre 4400 kcal/kg et 4600 kcal/kg.

Dans une forme de réalisation préférée de la présente invention, la fraction de grains (F) de maïs issue du procédé de la présente invention présente une valeur énergétique d'au moins 3500 kcal/kg, de préférence d'au moins 4000 kcal/kg, de préférence d'au moins 4300 kcal/kg.

La fraction de grains (F) de maïs issue du procédé de la présente invention présente une valeur énergétique d'au maximum 5000 kcal/kg, de préférence d'au maximum 4500 kcal/kg.

Selon la présente invention, il a été déterminé que le procédé mis en oeuvre permet de maintenir la valeur énergétique d'un grain de maïs à un niveau sensiblement constant entre le grain entier et la fraction de grains (F).

La valeur énergétique de la fraction de grains (F) est également applicable aux produits transformés de ladite fraction de grains (F), comme expliqué en détails plus bas.

Dans le cadre de la présente invention, il a été trouvé que la réduction de la teneur en matière grasse est contrebalancée par l'augmentation de la teneur en amidon. Ainsi, la fraction de grains (F) conserve un bon équilibre entre la teneur en matière grasse et la teneur en amidon, et donc, de bonnes propriétés nutritionnelles, ainsi qu'une bonne valeur énergétique.

Dans une forme de réalisation du procédé de la présente invention, la fraction de grains (F) présente une distribution granulométrique telle que :

$$D_{90} \geq 1000 \ \mu m \ et \ D_{90} \leq 6000 \ \mu m \ et \ D_{99,5} \leq 7000 \ \mu m$$

Dans une forme alternative de réalisation du procédé de la présente invention, la fraction de grains (F) présente une distribution granulométrique telle que :

$$D_{90} \geq 500 \ \mu m \ et \ D_{90} \leq 4000 \ \mu m \ et \ D_{99,5} \leq 5000 \ \mu m$$

Dans une autre forme alternative de réalisation du procédé de la présente invention, la fraction de grains (F) présente une distribution granulométrique telle que :

$$D_{90} \geq 1500 \ \mu m \ et \ D_{90} \leq 12\,000 \ \mu m \ et \ D_{99,5} \leq 15\,000 \ \mu m$$

Dans une forme de réalisation avantageuse de l'invention, les particules de la fraction de grains (F) de maïs présentent une taille de particules suivant l'une des distributions granulométriques suivantes :

$$D_{90} \geq 1000 \; \mu m \; et \; D_{90} \leq 6000 \; \mu m \; et \; D_{99,5} \leq 7000 \; \mu m \; ;$$

ou

$$D_{90} \geq 1200 \; \mu m \; et \; D_{90} \leq 6000 \; \mu m \; et \; D_{99,5} \leq 7000 \; \mu m \; ;$$

ou

$$D_{90} \geq 1400 \; \mu m \; et \; D_{90} \leq 6000 \; \mu m \; et \; D_{99,5} \leq 7000 \; \mu m.$$

Dans une forme de réalisation préférée de la présente invention, les particules de la fraction de grains (F) de maïs présentent une taille de particules suivant l'une des distributions granulométriques suivantes :

$$D_{10} \leq 1900 \; \mu m \; et \; D_{90} \leq 5000 \; \mu m \; et \; D_{50} \leq 3500 \; \mu m \; ;$$

ou

$$D_{10} \leq 1900 \; \mu m \; et \; D_{90} \leq 4750 \; \mu m \; et \; D_{50} \leq 3000 \; \mu m \; ;$$

ou

$$D_{10} \leq 1900 \; \mu m \; et \; D_{90} \leq 4750 \; \mu m \; et \; D_{50} \leq 2884 \; \mu m.$$

Au sens de la présente invention, une distribution granulométrique de la fraction de grains (F), en particulier la fraction de grains (F) de maïs, exprimée par $D_{xx} \leq Y$ désigne un pourcentage (xx%) en poids de particules de la fraction de grains (F) présentant une taille de particule inférieure ou égale à Y.

Par exemple, $D_{90} \geq 1000 \; \mu m$ signifie que 90% en poids des particules de la fraction de grains (F), en particulier la fraction de grains (F) de maïs, présentent une taille de particule supérieure ou égale à 1000 $\mu m$.

Dans le cadre de la présente invention, la distribution granulométrique de la fraction de grains (F), en particulier la fraction de grains (F) de maïs, peut être déterminée par tout moyen approprié, entre autres par diffusion dynamique de la lumière et par tamisage mécanique, de préférence par tamisage mécanique.

L'analyse par tamisage mécanique est typiquement basée sur la séparation mécanique de différentes sous-fractions de la fraction de grains (F), en particulier la fraction de grains (F) de maïs, sur une série de tamis superposés.

Les valeurs $D_{50}$, $D_{90}$ et $D_{99,5}$ peuvent être calculées à partir des pourcentages en poids des sous-fractions obtenues dans chaque tamis par rapport au poids total de la fraction de grains (F). Ce calcul est réalisé comme suit :

1) Calcul du pourcentage en poids de particules retenues sur chaque tamis
2) Expression du pourcentage en poids cumulé passant à travers chaque tamis

Une méthode d'analyse granulométrique typique est décrite en détails dans la partie expérimentale.

Selon l'invention, il a été trouvé de façon surprenante que la fraction de grains (F) issue du procédé de la présente invention présente systématiquement une teneur en fer réduite d'au moins 25% en poids par rapport à la teneur en fer initiale des grains entiers, tout en présentant une teneur en matière grasse traduisant de bonnes propriétés nutritionnelles, une bonne digestibilité et une bonne appétence.

En outre, de façon toute aussi surprenante, malgré les contraintes auxquelles sont soumis les grains entiers et/ou les fractions de grains en étant issues, il a été montré, dans le cadre de la présente invention, que la teneur en matière grasse a été réduite et la teneur en amidon a augmenté, tout en conservant de bonnes propriétés nutritionnelles et une bonne valeur énergétique.

*Produits transformés*

La fraction de grains (F) obtenue selon l'invention peut être transformée en utilisant des procédés de transformation connus, qui sont également un aspect de la présente invention. Parmi les procédés de transformation connus, on peut mentionner le broyage, l'aplatissage, le floconnage, le toastage, l'extrusion, la granulation, la micronisation ou encore l'expansion.

Les produits transformés issus desdits procédés de transformation sont également un aspect de la présente invention. Parmi les produits transformés, on peut mentionner les flocons, les farines, les extrudés, les granulés, les produits expandés, les produits micronisés et les produits toastés.

Dans un mode de réalisation du procédé de la présente invention, les fragments formant la fraction de grains (F) sont soumis à un procédé de floconnage, au cours duquel les grains éventuellement humidifiés et/ou cuits sont aplatis et transformés en flocons. Les flocons de la présente invention peuvent être préparés selon une pluralité de procédés bien connus de l'homme du métier et décrits dans l'état de la technique, comme par exemple dans le document US 558393, l'ensemble du contenu de cette demande étant incorporé ici par référence à toutes fins.

Les inventeurs ont trouvé, de façon surprenante, qu'après floconnage, la teneur en fer n'est pas significativement changée, mais qu'elle peut même être légèrement réduite. Les flocons de la présente invention présentent une teneur en fer réduite d'au moins 25% en poids, de préférence d'au moins 30% en poids, de préférence d'au moins 35% en poids, de préférence d'au moins 40% en poids, de préférence d'au moins 45% en poids, préférablement d'au moins 50% en poids, préférentiellement d'au moins 55% en poids, plus préférentiellement d'au moins 60% en poids par rapport à la teneur en fer initiale du grain entier.

Il est entendu que la teneur en fer dans les flocons de grains de maïs est au minimum de 1,0 mg/kg, de préférence au minimum de 2,0 mg/kg, de préférence au minimum de 2,5 mg/kg.

Typiquement, les grains de maïs entiers présentent une teneur en fer allant de 10,0 mg/kg à 50,0 mg/kg, dépendant des variétés.

Dans une forme de réalisation préférée de la présente invention, les flocons de grains de maïs présentent une teneur réduite en fer par rapport à la teneur en fer initiale du grain de maïs entier. La teneur en fer les flocons de grains de maïs peut être d'au moins 1,0 mg/kg, de préférence au minimum 2,0 mg/kg, de préférence au minimum 2,5 mg/kg.

En outre, la teneur en fer des flocons de maïs peut être au maximum de 30,0 mg/kg, de préférence au maximum de 25,0 mg/kg, préférentiellement au maximum de 20,0 mg/kg, plus préférentiellement au maximum de 15,0 mg/kg, de préférence au maximum de 13,0 mg/kg, préférablement au maximum de 12,5 mg/kg, plus préférablement au maximum de 12,0 mg/kg.

*Utilisation de la fraction de grains (F) et/ou des produits transformés*

L'utilisation de la fraction de grains (F) et/ou des produits transformés issus de la fraction de grains (F) est également un aspect de la présente invention.

Dans une forme de réalisation de la présente invention, les produits transformés peuvent être utilisés dans de multiples domaines d'application, tels que la brasserie, la production d'alcool de fermentation, le domaine agroalimentaire, de la boulangerie-pâtisserie, et l'alimentation animale.

Parmi les applications dans la brasserie, on peut mentionner l'utilisation de la fraction de grains (F) ou des produits transformés issus de la fraction de grains (F) dans la fabrication de la bière.

Parmi les applications dans le domaine de la production d'alcool de fermentation on peut mentionner l'utilisation de la fraction de grains (F) ou des produits transformés issus de la fraction de grains (F) dans la fabrication d'alcools, particulièrement d'alcools de grains tels que le genièvre, le gin, le saké, le whiskey, ou encore différents types de schnaps.

Parmi les applications dans le domaine de l'agroalimentaire et de la boulangerie-pâtisserie, on peut mentionner l'utilisation de la fraction de grains (F) ou des produits transformés issus de la fraction de grains (F) dans la fabrication de collations sucrées ou salées telles que des barres de céréale ou des céréales de petit-déjeuner, des biscuits sucrés, des biscuits, du pain, des gâteaux ou des pâtisseries.

Parmi les applications dans le domaine de l'alimentation animale, on peut mentionner l'utilisation de la fraction de grains (F) ou des produits transformés issus de la fraction de grains (F) dans la fabrication d'aliments de type solide destinés aux animaux tels que les animaux d'élevage, les animaux domestiques, les oiseaux, les poissons, ou encore les insectes.

Un produit de nourriture animale comprenant la fraction de grains (F) ou des produits transformés issus de la fraction de grains (F) est également un aspect de la présente invention.

*Composé entrant dans la composition d'une alimentation animale*

Le composé issu de la fraction de grains (F) entrant dans la composition d'une alimentation animale est également un aspect de la présente invention.

La présente invention est décrite avec des réalisations particulières mais l'invention n'est pas limitée par celles-ci.

**Partie expérimentale**

L'invention et l'effet d'une alimentation selon l'invention sur la couleur de la viande des veaux nourris avec cette alimentation seront décrits en détail dans les exemples suivants, dont la visée est purement illustrative et ne limite en rien la portée de l'invention.

**Procédé général d'obtention de la fraction (F) selon l'invention**

Une fraction de grains (F) a été obtenue en soumettant des grains de maïs entier au procédé de la présente invention.

Deux types de grains de maïs différents, nommés CREIL et SW, ont été utilisés, comme indiqué dans les tableaux 1 et 2. Les teneurs initiales en fer respectives des grains de maïs de type CREIL et SW sont indiquées dans le tableau 2.

Au total, 9 échantillons ont été préparés et analysés. Sur ces 9 échantillons, 5 ont été obtenus à partir de maïs de type SW et 4 ont été obtenus à partir de maïs de type CREIL.

Les grains entiers ont tout d'abord été conditionnés. Le conditionnement comprend un nettoyage avec un flux d'air circulant dans un séparateur MTRA et dans une épierreuse MTRC, puis une humidification par addition de 1% d'eau, durant environ 90 secondes.

Les grains entiers ainsi conditionnés ont ensuite été traités par abrasion (étape 1 selon l'invention) effectué dans une machine MXHM de la société Bühler.

Les grains ainsi traités ont ensuite été séparés en deux fractions, respectivement $(F_1)$ et $(F_2)$ selon leur taille de particules. L'étape de séparation a été réalisée dans un dispositif muni d'un écran perforé également inclus dans la machine MXHM de Bühler. Les perforations définissent la valeur seuil de taille de particules séparant la fraction $(F_1)$ de la fraction $(F_2)$. Lesdites perforations sont ovales et ont une largeur de 1,2 mm et une longueur de 12 mm. Les grains broyés ont été introduits dans ledit dispositif muni d'un écran perforé.

Les fragments traversant l'écran perforé, ayant une taille de particules inférieure à la valeur seuil, représente la fraction $(F_2)$.

Les fragments retenus sur l'écran perforé, ayant une taille de particules supérieure à la valeur seuil, représente la fraction $(F_1)$.

La fraction $(F_2)$ a été aspirée par un canal d'aspiration au sortir de la machine MXHM puis a circulé au travers d'un cyclone avant d'avoir été collectée.

La fraction $(F_1)$ a été dirigée vers un séparateur MTRB de la société Bühler dans lequel elle a subi une nouvelle séparation (étape 3).

L'étape 3 a été réalisée en réglant la machine selon les paramètres résumés dans le tableau 1.

Comme indiqué dans le tableau 1 et selon cet exemple, trois fractions de grains $(F, F_3$ et $F_4)$ sont obtenues à l'étape 3.

Dans le cas des échantillons 1 à 6, le séparateur MTRB comporte deux tamis disposés l'un au-dessus de l'autre. La fraction $(F_1)$ a été introduite par le haut du séparateur et a été répartie de façon uniforme sur le tamis supérieur, présentant des mailles d'une dimension de 7000 $\mu$m, afin d'être séparée des fragments de taille supérieure à 7000 $\mu$m ou des impuretés restantes de grande taille. Des impuretés de grande taille peuvent par exemple désigner des brins de paille, des grains restés entiers.

Dans le cas des échantillons 7, 8 et 9, le tamis supérieur a été retiré, le MTRB comporte le tamis inférieur uniquement.

Les fragments de la fraction $(F_1)$ ayant optionnellement traversé le tamis supérieur ont ensuite toutes été réparties sur le tamis inférieur ayant des mailles d'une dimension de 1500 $\mu$m. Les fragments ayant traversé le tamis inférieur ont été regroupées en une fraction $(F_3)$, dont les fragments ont une taille caractéristique de particules inférieure à 1500 $\mu$m, et qui a été collectée.

Les fragments restants, présentant une taille de particules comprise entre 1500 $\mu$m et 7000 $\mu$m, ont été introduites dans un canal d'aspiration d'air pour une étape de séparation ultérieure, au cours de laquelle les fragments de faible densité, plus légers, ont été dirigés vers le haut du canal d'aspiration d'air pour former la fraction $(F_4)$, qui a été collectée. Les fragments restants, formant la fraction (F), ont été dirigés vers le bas et collectés.

Les différents paramètres du séparateur MTRB et les proportions de fractions $(F_1)$ (regroupant les fractions (F), $(F_3)$ et $(F_4)$) et $(F_2)$ ont été consignées dans le tableau 1 ci-dessous.

La teneur en fer et en matière grasse des différents échantillons de fraction (F) a été mesurée, et les résultats ont été consignés dans le tableau 2 ci-dessous. Les détails des méthodes d'analyse de la teneur en fer et en matière grasse sont spécifiés ci-dessous.

Tableau 1 : Paramètres du procédé et proportions de fractions collectées

| Echantillon | Type de maïs | Distance entre les rouleaux exprimée selon les longueurs de vis de réglage inférieures et supérieures(mm) | Distance entre les barres d'impact et le système de traitement abrasif | Nombre de barres d'impact | Tamis | ($F_1$) | | | ($F_2$) (%*) |
|---|---|---|---|---|---|---|---|---|---|
| | | | | | | (F) (%*) | ($F_3$) (%*) | ($F_4$) (%*) | |
| 1 | SW | 85/85 | 6 | 4 | Inférieur et supérieur | **61,3** | 4,2 | 0,9 | 33,6 |
| 2 | SW | 75/75 | 6 | 4 | Inférieur et supérieur | **58,9** | 3,7 | 0,6 | 36,9 |
| 3 | CREIL | 85/85 | 6 | 4 | Inférieur et supérieur | **58,5** | 4,0 | 1,1 | 36,4 |
| 4 | CREIL | 75/75 | 6 | 4 | Inférieur et supérieur | **56,7** | 3,4 | 0,6 | 39,3 |
| 5 | SW | 85/85 | 8 | 4 | Inférieur et supérieur | **66,7** | 4,1 | 1,2 | 28,0 |
| 6 | SW | 80/80 | 8 | 4 | Inférieur et supérieur | **64,9** | 3,9 | 0,9 | 30,3 |
| 7 | SW | 90/90 | 8 | 4 | Inférieur uniquement | **68,1** | 4,2 | 1,6 | 26,1 |
| 8 | CREIL | 92/92 | 8 | 4 | Inférieur uniquement | **64,8** | 4,4 | 2,9 | 27,9 |
| 9 | CREIL | 88/88 | 8 | 4 | Inférieur uniquement | **63,9** | 4,2 | 2,4 | 29,5 |
| (* % en poids par rapport au poids total des grains entiers) | | | | | | | | | |

Tableau 2 : Teneur en fer et teneur en matière grasse de la fraction (F)

| Echantillon | Type de grains de maïs | Teneur en fer initiale (mg/kg) | Teneur en fer de la fraction (F) (mg/kg) | Réduction de la teneur en fer de la fraction (F) par rapport à la teneur en fer initiale des grains(%*) | Teneur en matière grasse de la fraction (F) (%**) |
|---|---|---|---|---|---|
| 1 | SW | 20,8 | 7,5 | 63,9 | 1,87 |
| 2 | SW | 20,8 | 8,4 | 59,6 | 1,12 |
| 3 | CREIL | 16,1 | 4,5 | 72,0 | 1,25 |
| 4 | CREIL | 16,1 | 4,3 | 73,3 | 0,84 |
| 5 | SW | 20,8 | 11,0 | 47,1 | 2,52 |
| 6 | SW | 20,8 | 7,8 | 62,5 | 1,98 |
| 7 | SW | 20,8 | 9,9 | 52,4 | 2,5 |
| 8 | CREIL | 16,1 | 8,8 | 45,3 | 2,89 |
| 9 | CREIL | 16,1 | 8,7 | 46,0 | 2,1 |
| *pourcentage en poids<br>**pourcentage en poids de matière grasse par rapport au poids total de la fraction (F) | | | | | |

Une analyse granulométrique de la fraction (F) a également été effectuée. Les détails des méthodes d'analyse granulométrique sont spécifiés ci-dessous.

Les échantillons de fraction de grains (F) ont ensuite été aplatis et transformés en flocons.

Tous les échantillons ont été trempés dans de l'eau pendant 8 heures, puis bouillis dans de l'eau pendant une heure. Les échantillons ont ensuite été passés entre deux rouleaux froids adjacents en rotation dans des sens opposés, afin d'aplatir les fragments des fractions de grains (F).

Les échantillons ont ensuite été cuits dans un four jusqu'à ce que les flocons ainsi obtenus soient devenus secs. La teneur en fer et la teneur en matière grasse des flocons obtenus à partir des 9 échantillons ont été mesurées selon les méthodes d'analyse de la teneur en fer et de la teneur en matière grasse décrites ci-dessous. Pour la totalité des échantillons, la teneur en fer est restée inchangée par rapport à la teneur en fer des fractions (F) correspondantes.

*Méthode d'analyse de la teneur en fer*

Les teneurs en fer des différents échantillons de fraction de grains (F) et des flocons a été mesurée par spectroscopie utilisant un plasma à couplage inductif. Les échantillons ont été préparés de la façon suivante. 1000 mg de la fraction de grains (F) ou de flocons ont été broyés, puis digérés par de l'acide nitrique suprapur à 65% dans de l'eau nanopure, dans un système de digestion micro-onde MLS TurboWave, à une température de 260°C. Les échantillons ont ensuite été introduits dans le spectroscope à plasma à couplage inductif, de la marque Varian Vista MPX axial, utilisant le mode « Quant Fe 0-10 mg/L ».

*Méthode d'analyse de la teneur en matière grasse*

L'analyse de la teneur en matière grasse requiert un broyage des échantillons. Comme le broyage peut causer des pertes en eau, la teneur en eau des échantillons a préalablement été déterminée. La teneur en eau a été mesurée suivant la méthode standard ICC n° 110/1, à 130°C pendant 90 minutes, avec un appareil d'analyse thermogravimétrique TGA 701 de la société LECO corporation.

Chaque échantillon a été broyé à l'aide d'un broyeur ultra-centrifuge ZM200 de Retsch équipé d'un écran conidur de 0,5 mm, et des échantillons homogènes ont été préparés. La teneur en matière grasse de chaque échantillon a été déterminée selon la méthode Soxhlet de dosage de la matière grasse totale, avec une reproductibilité de $\pm 0,1$ %.

*Analyse granulométrique de la fraction (F)*

La fraction de grains (F) a été analysée au moyen du dispositif de tamisage « Universal Laboratory Sifter » de la société Bühler.

250g d'échantillons ont été placés dans le dispositif de tamisage et soumis à un mouvement excentrique durant 5 minutes à une vitesse de 165 tours par minute (rpm).

Ce dispositif comporte 7 tamis, ces derniers présentant respectivement des mailles ayant les dimensions suivantes: 1500 $\mu$m, 1900 $\mu$m, 2884 $\mu$m, 3350 $\mu$m, 4000 $\mu$m, 4750 $\mu$m et 5600 $\mu$m, afin de déterminer la distribution granulométrique des différents échantillons . Les résultats ont été consignés dans le tableau 3 ci-dessous.

Tableau 3 : Distribution granulométrique de la fraction (F)

| Echantillon | Pourcentage (en poids) de fragments compris entre les tamis | | | | | | | | |
|---|---|---|---|---|---|---|---|---|---|
| | >5600 $\mu$m | 5600-4750 $\mu$m | 4750-4000 $\mu$m | 4000-3350 $\mu$m | 3350-2884 $\mu$m | 2884-1900 $\mu$m | 1900-1500 $\mu$m | <1500 $\mu$m | $\Sigma$ |
| 1 | 1,1 | 4,7 | 16,3 | 17,5 | 18,1 | 39,4 | 2,8 | 0,2 | 100,1 |
| 2 | 0,4 | 4,2 | 11,7 | 13,1 | 18,9 | 47,3 | 4,2 | 0,3 | 100,1 |
| 3 | 1,6 | 8,1 | 16,0 | 14,4 | 18,0 | 38,8 | 2,9 | 0,2 | 100,0 |
| 4 | 2,5 | 6,8 | 16,6 | 14,7 | 16,8 | 39,4 | 2,9 | 0,2 | 99,9 |
| 5 | 1,4 | 5,5 | 14,3 | 13,7 | 17,8 | 43,0 | 3,9 | 0,4 | 100,0 |
| 6 | 0,9 | 5,4 | 14,2 | 12,8 | 18,5 | 43,5 | 4,3 | 0,4 | 100,0 |
| 7 | 1,4 | 6,3 | 16,0 | 14,1 | 19,2 | 38,9 | 3,8 | 0,4 | 100,1 |
| 8 | 2,1 | 7,6 | 16,1 | 16,3 | 16,2 | 38,1 | 3,2 | 0,4 | 100,0 |
| 9 | 2,2 | 7,8 | 15,9 | 13,7 | 16,2 | 40,2 | 3,5 | 0,4 | 99,9 |

Il est bien entendu que la présente invention n'est en aucune façon limitée aux formes de réalisations décrites ci-dessus et que bien des modifications peuvent y être apportées sans sortir du cadre des revendications annexées.

**Exemple d'application de l'invention: Alimentation de veaux blancs avec une alimentation contenant du maïs et des flocons de maïs dont les teneurs en fer ont été réduits à l'aide du procédé selon l'invention**

Les veaux blancs sont des jeunes veaux de type laitier ou croisé qui sont élevés pendant environ 8 mois, avec une alimentation principalement laitière. De ce fait, la viande obtenue avec de tels veaux est caractérisée par une couleur rose pâle et est qualifiée de "viande blanche". Il s'agit là d'un critère de différenciation important par rapport à d'autres types de viande.

Depuis quelques années, pour des raisons de bien-être animal, la distribution d'aliments solides d'origine végétale (et contenant une part de paille) en plus du lait est obligatoire. Cependant, ces aliments étant riches en fer (contrairement au lait), il est difficile de garantir la couleur blanche de la viande.

Afin de préserver la santé et les performances des veaux, il est important que l'aliment solide soit riche et équilibré. Le maïs et le maïs floconné (thermo-traité) sont des matières de choix puisqu'elles présentent un taux relativement bas en fer.

La fraction de grains (F) obtenue en soumettant des grains de maïs entier au procédé de la présente invention et le composé issu de cette fraction de grains (F) obtenue avec l'invention, de par leur teneur en fer fortement réduite, constituent une solution idéale pour atteindre l'objectif d'une qualité de viande recherchée, ceci à moindre coût et en maximisant la part maximale d'aliments solides dans l'alimentation des veaux.

*Matériel et méthodes de l'essai*

Dans l'essai réalisé, 300 veaux âgés de deux semaines ont été répartis en deux groupes, un groupe contrôle nourri avec une alimentation classique et un groupe essai pour lequel l'alimentation comprenait du maïs et des flocons de maïs dont la teneur en fer a été réduite selon l'invention. Les valeurs alimentaires (niveaux d'énergie, de protéines, etc.) étaient identiques entre ces deux types d'alimentation, ce qui permet de comparer parfaitement les deux lots.

Les veaux avaient librement accès à de l'eau. Ils en ont consommé 1,5 litres par jour à 6 semaines et 4 litres par jour à 12 semaines d'âge. L'aliment lacté liquide, distribué seul au début de l'élevage, a été réduit progressivement et complété avec l'aliment solide végétal à des niveaux croissants.

L'aliment solide végétal était composé de maïs et de dérivés de maïs, d'orge, de lupin, de mélasse de betterave, d'huiles et de minéraux. Il contenait 7,5% de maïs et 25% de flocons de maïs ordinaires pour l'aliment contrôle, et obtenus selon l'invention pour l'aliment essai. Chaque régime alimentaire contenait en plus 9,1% de paille incorporé lors de la distribution aux veaux.

Après 6 semaines, les veaux avaient ingéré en moyenne 31,08 kg de poudre de lait et 10,99 kg d'aliment solide. Après 12 semaines, l'ingestion moyenne était respectivement de 75,76 kg de poudre de lait et de 61,05 kg d'aliment solide. On peut constater que la part d'aliment solide a progressé de 21% à 6 semaines à 45% à 12 semaines d'âge, ce qui implique également une forte augmentation de l'approvisionnement en fer.

La quantité de fer administrée par l'alimentation solide à 12 semaines est de 2275 mg/kg pour le groupe contrôle et de 2109 mg/kg pour le groupe essai, sachant que ces aliments contiennent respectivement 38 et 35 ppm de fer, mais qu'ils contiennent tous deux de la paille à raison de 30 ppm. La différence d'ingestion en fer sur la période de 12 semaines s'élevait donc à 7,3% entre les deux régimes alimentaires.

Afin de garantir la couleur « blanche » de la viande, tout en prévenant des cas d'anémie parmi les veaux (niveau de fer sanguin trop faible), des prises de sang ont été effectuées sur les veaux à intervalles réguliers. On a déterminé d'une part le taux de fer dans le sérum sanguin, et d'autre part le taux d'hémoglobine dans les globules rouges (l'hémoglobine est responsable de la coloration rouge du sang et de la viande, et le fer est un constituant majeur de l'hémoglobine). Ces mesures permettent de vérifier si les apports nutritionnels en fer sont adéquats.

*Résultats*

Les veaux des deux lots étaient en très bonne santé après 12 semaines d'essai et les performances (croissance) ainsi que le comportement étaient normaux.

Les analyses sanguines ont permis de confirmer l'efficacité de l'alimentation modifiée grâce à l'invention.

o Le taux d'hémoglobine moyen après 6 semaines des veaux du régime contrôle (n= 147) était de 9,39 g/dl contre 9,46 g/dl pour les veaux du régime essai (n= 147). Il n'a donc été constaté aucune différence significative (p=0,47), ce qui est attendu vu la faible consommation d'aliments solides à ce stade.
o Par contre, après 12 semaines, les taux moyens mesurés étaient respectivement de 9,73 (n= 145) et 9,25 g/dl (n= 148), ce qui représente une diminution très hautement significative (p<0,0001) chez les veaux du régime essai.

o Aussi les analyses du taux de fer sérique sur 10 veaux du groupe contrôle et sur 9 veaux du groupe essai (choisis au hasard), avec des moyennes respectives de 31,7 et 24,9 µg/dl confirment ces résultats (après 12 semaines).

o Les résultats de la prise de sang réalisée après 16 semaines confirment l'effet déjà observé à 12 semaines : en effet, les taux d'hémoglobine étaient respectivement de 9,82 et de 9,36 g/dl pour les groupes contrôle (n= 142) et essai (n=148), ce qui indique une différence à nouveau très hautement significative (p<0,0001).

o Il est également intéressant de noter que l'évolution du taux d'hémoglobine moyen chez les veaux du lot contrôle augmente de manière significative entre 6 et 12 semaines en passant de 9,39 à 9,73 g/dl (p=0,006), alors qu'il tend à diminuer pour le lot essai en passant de 9,46 à 9,25 g/dl (p=0,09) comme l'illustre le tableau ci-dessous.

Tableau 4 : Taux d'hémoglobine en fonction de l'âge

| Groupe | Taux d'hémoglobine (g/dl) | | |
|---|---|---|---|
| | Après 6 semaines | Après 12 semaines | Après 16 semaines |
| Contrôle | 9,39 | 9,73 | 9,82 |
| Selon l'invention (groupe essai) | 9,46 | 9,25 | 9,36 |

L'élevage des veaux se terminant seulement après environ 35 semaines, et en considérant que la proportion d'aliment solide continue à augmenter jusqu'à atteindre environ 50% en fin d'élevage (environ 300 kg d'aliment solide ingéré par veau fini), il est possible de s'attendre encore à une augmentation de l'effet du traitement alimentaire obtenu avec l'invention en fin d'élevage et à une coloration rouge de la viande beaucoup moins marquée avec le régime essai réduit en fer selon l'invention. Après abattage des veaux, la couleur de la viande est mesurée et tient compte d'une classification à laquelle la valeur marchande de la carcasse est intimement liée.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Procédé d'obtention, au départ de grains entiers choisis dans le groupe constitué d'au moins un grain de céréale, d'au moins un grain d'oléagineux, d'au moins un grain de légumineuse et d'un mélange de ces derniers, d'une fraction de grains (F) présentant une teneur en fer réduite d'au moins 25% en poids, de préférence d'au moins 40% en poids, de préférence d'au moins 45% en poids, de préférence d'au moins 50% en poids, de préférence d'au moins 55% en poids, de préférence d'au moins 60% en poids par rapport à une teneur en fer initiale desdits grains entiers, ledit procédé comprenant les étapes suivantes :

Etape 1 : une étape de traitement desdits grains entiers, désignant de préférence une fragmentation réalisée par un broyage, par un traitement par friction et/ou par un traitement abrasif des grains entiers,
Etape 2 : une étape de séparation desdits grains traités à l'étape 1 de telle sorte à obtenir une première fraction de grains ($F_1$) comprenant des premiers fragments de grains présentant une taille de particules supérieure à une ou des valeurs seuils prédéterminées de taille de particules et une deuxième fraction de grains ($F_2$) comprenant des deuxièmes fragments de grains présentant une taille de particules inférieure à ladite ou lesdites valeurs seuils prédéterminées de taille de particules, et
Etape 3 : une étape de séparation de ladite première fraction de grains ($F_1$) obtenue à l'étape 2, sur base de la taille et/ou de la forme desdits premiers fragments, de telle sorte à isoler ladite fraction de grains (F) présentant ladite teneur en fer réduite.

2. Procédé selon la revendication 1, dans lequel ladite fraction de grains (F) est obtenue au départ de grains entiers étant des grains de maïs.

3. Procédé selon l'une quelconque des revendications précédentes, dans lequel ladite fraction de grains (F) présente une distribution granulométrique telle que :

$$D_{90} \geq 1000 \ \mu m \ et \ D_{90} \leq 6000 \ \mu m \ et \ D_{99,5} \leq 7000 \ \mu m.$$

**4.** Procédé selon l'une quelconque des revendications précédentes, dans lequel l'étape 1 est précédée ou suivie d'une étape de conditionnement des grains, et dans lequel ladite étape de conditionnement des grains comprend de préférence une ou plusieurs étapes de nettoyage, une ou plusieurs étapes d'humidification et/ou une ou plusieurs étapes de polissage.

**5.** Procédé selon l'une quelconque des revendications précédentes, dans lequel ladite étape 2 de séparation est réalisée au moyen d'un dispositif muni d'un écran perforé dont les perforations présentent une forme rectangulaire ou ovale, dans lequel lesdites perforations présentent de préférence une forme rectangulaire ou ovale présentant de préférence une longueur qui n'est pas inférieure à 3,0 mm, de préférence pas inférieure à 5,0 mm, de préférence pas inférieure à 7,0 mm, de préférence pas inférieure à 10,0 mm, de préférence pas inférieure à 12,0 mm, ladite longueur n'étant pas non plus supérieure à 30,0 mm, de préférence pas non plus supérieure à 25,0 mm, de préférence pas non plus supérieure à 20,0 mm, de préférence pas non plus supérieure à 18,0 mm, de préférence pas non plus supérieure à 15,0 mm, de préférence pas non plus supérieure à 14,0 mm, de préférence pas non plus supérieure à 13,0 mm, de préférence pas non plus supérieure à 12,0 mm, et dans lequel lesdites perforations présentant de préférence une forme rectangulaire ou ovale présentant de préférence une largeur qui n'est pas inférieure à 0,5 mm, de préférence pas inférieure à 0,75 mm, de préférence pas inférieure à 1,0 mm, de préférence pas inférieure à 1,2 mm, ladite largeur n'étant pas non plus supérieure à 6,0 mm, de préférence pas non plus supérieure à 5,0 mm, de préférence pas non plus supérieure à 4,0 mm, de préférence pas non plus supérieure à 3,0 mm, de préférence pas non plus supérieure à 2,5 mm, de préférence pas non plus supérieure à 2,0 mm, de préférence pas non plus supérieure à 1,5 mm, de préférence pas non plus supérieure à 1,2 mm.

**6.** Procédé selon l'une quelconque des revendications précédentes, dans lequel ladite fraction de grains ($F_2$) représente au plus 50% en poids, de préférence au plus 45% en poids, de préférence au plus 40% en poids, de préférence au plus 35% en poids par rapport au poids total des grains entiers, et dans lequel la fraction ($F_2$) représente au moins 15% en poids, de préférence au moins 20% en poids, de préférence au moins 25% en poids par rapport au poids total des grains entiers.

**7.** Procédé selon l'une quelconque des revendications précédentes, dans lequel la séparation de la première fraction ($F_1$) de l'étape 3 comprend une séparation mécanique, dans lequel ladite séparation mécanique est effectuée à l'aide d'un tamis ou d'une pluralité de tamis présentant des mailles de tailles différentes.

**8.** Procédé selon la revendication 7, dans lequel une fraction de grains intermédiaire [ci-après nommée fraction de grains (F')] est collectée entre un tamis en position inférieure et un tamis en position supérieure, si ledit tamis en position supérieure est présent, ou sur le tamis en position inférieure si un seul tamis est utilisé.

**9.** Procédé selon la revendication 8, dans lequel ladite fraction de grains (F) est obtenue en soumettant la fraction (F') à une étape de séparation ultérieure en soustrayant une fraction de grains ($F_4$).

**10.** Procédé selon la revendication 7, dans lequel une fraction de grains ($F_3$) est collectée après avoir traversé l'ensemble des tamis, spécifiquement après avoir traversé un tamis en position inférieure.

**11.** Procédé selon l'une quelconque des revendications précédentes, dans lequel la fraction de grains (F) représente au maximum 80% en poids, de préférence au maximum 75% en poids, préférablement au maximum 70% en poids par rapport au poids total des grains entiers, et dans lequel la fraction de grains (F) représente au moins 45% en poids, de préférence au moins 50% en poids, de préférence au moins 55% en poids par rapport au poids total des grains entiers.

**12.** Fraction de grains (F) obtenue selon le procédé de l'une quelconque des revendications 1 à 11.

**13.** Procédé de transformation d'une fraction de grains (F) obtenue selon le procédé suivant les revendications 1 à 11 de telle façon à obtenir un produit transformé, dans lequel est de préférence réalisée une étape choisie parmi le groupe consistant en un broyage, un aplatissage, un toastage, un floconnage, une extrusion, une granulation, une micronisation et un procédé d'expansion.

**14.** Produit transformé selon le procédé de transformation suivant la revendication 13, ledit produit transformé présentant une teneur en fer réduite d'au moins 25% en poids, de préférence d'au moins 30% en poids, de préférence d'au moins 35% en poids, de préférence d'au moins 40% en poids, de préférence d'au moins 45% en poids, de préférence d'au moins 50% en poids, de préférence d'au moins 55% en poids, de préférence d'au moins 60% en poids par rapport à la teneur en fer initiale du grain entier, et ledit produit transformé étant un flocon, un extrudé, un granulé, un produit micronisé, un produit toasté ou un produit expandé.

15. Utilisation de la fraction (F) selon la revendication 12 ou du produit transformé selon le procédé de transformation suivant la revendication 13 dans le domaine de la brasserie, de la production d'alcool de fermentation, le domaine agroalimentaire, de la boulangerie-pâtisserie, et/ou l'alimentation animale, de préférence l'alimentation des animaux d'élevage, préférentiellement l'alimentation des bovins, de préférence des veaux, préférentiellement des veaux de boucherie.

16. Composé issu de la fraction de grains (F) selon la revendication 12 ou du produit transformé selon le procédé de transformation suivant la revendication 13 entrant dans la composition d'une alimentation animale, de préférence l'alimentation des animaux d'élevage, préférentiellement l'alimentation des bovins, de préférence des veaux, préférentiellement des veaux de boucherie.

**RÉFÉRENCES CITÉES DANS LA DESCRIPTION**

**Documents brevets cités dans la description**

- WO 2005108533 A2
- US 558393 A